# EUROPÄISCHE PATENTANMELDUNG

(11) **EP 3 842 496 A1**
(43) Veröffentlichungstag der Anmeldung: **30.06.2021**
(21) Anmeldenummer: 19219339.9
(22) Anmeldetag: 23.12.2019
(51) Int. Cl.: C08L 77/06, C08G 69/26

(54) **POLYAMID-FORMMASSEN FÜR HYPOCHLORIT-BESTÄNDIGE ANWENDUNGEN**

(71) Anmelder: EMS-CHEMIE AG, 7013 Domat/Ems (CH)
(72) Erfinder: ALKAN, Arda, 7013 Domat/Ems (CH); WIEDEMANN, Thomas, 7013 Domat/Ems (CH); CADALBERT, Andri, 7402 Bonaduz (CH); HEWEL, Manfred, 7013 Domat/Ems (CH); HOFFMANN, Botho, 7013 Domat/Ems (CH)
(74) Vertreter: Pfenning, Meinig & Partner mbB

(57) **Zusammenfassung**

Die vorliegende Erfindung betrifft die Verwendung einer Polyamid-Formmasse für Anwendungszwecke, in denen eine hohe Beständigkeit gegen Hypochlorige Säure maßgeblich ist. Die Formmasse wird somit erfindungsgemäß für Formkörper, die für den Kontakt mit wässrigen, Hypochlorige Säure enthaltenden Lösungen geeignet sind, verwendet.

## Beschreibung

Die vorliegende Erfindung betrifft die Verwendung einer Polyamid-Formmasse für Anwendungszwecke, in denen eine hohe Beständigkeit gegen Hypochlorige Säure maßgeblich ist. Die Formmasse wird somit erfindungsgemäß für Formkörper, die für den Kontakt mit wässrigen, Hypochlorige Säure enthaltenden Lösungen geeignet sind, verwendet.

Die EP 1 291 073 A1 betrifft Polyamid-Mikrokapseln, die durch Kontaktieren von wässrigen Phasen, die Diamine und anionische Polymere und/oder Heteropolysaccharide in gelöster Form enthalten, mit Ölphasen, die gelöste Dicarbonsäurehalogenide enthalten, unter Bildung einer W/O-Emulsion, Aushärten mit einer Calciumsalzlösung sowie Filtern, Waschen und Trocknen erhalten werden. Die Polyamid-Mikrokapseln werden als gegenüber Hypochloritlauge stabil beschrieben und für die Zwecke von Kosmetika verwendet.

Die EP 3 502 188 A1 betrifft eine Polyamid-Formmasse insbesondere zur Verwendung im Trinkwasserbereich, das heißt zur Herstellung von Formteilen, bei welchen beim bestimmungsgemäßem Gebrauch die verarbeitete Formmasse in Kontakt mit Trinkwasser tritt. Eine Beständigkeit gegenüber Hypochlorit wird allerdings nicht genannt, noch ein Einsatzbereich der Polyamid-Formmasse für Formkörper, die im bestimmungsgemäßem Gebrauch in Kontakt mit Hypochlorit-enthaltenden Lösungen treten, genannt.

Aus der EP 0 469 435 A1 sind Copolyamide bekannt, die sich zur Herstellung von Formkörpern mit hoher Glasumwandlungstemperatur, Steifigkeit und Schlagzähigkeit bei geringer Feuchtigkeitsaufnahme auszeichnen. Zudem wird ein Verfahren zur Herstellung dieser Copolyamide wie ihre Verwendung zur Herstellung von Formkörpern offenbart.

Ausgehend hiervon war es Aufgabe der vorliegenden Erfindung, geeignete Polyamid-Formmassen zu finden, die eine Verwendung ermöglichen, bei denen die Zusammensetzung im Gebrauch Hypochlorit-enthaltenden Lösungen ausgesetzt ist. Die Verwendung soll hierbei eine verbesserte Stabilität gegenüber aus dem Stand der Technik bekannten Anwendungen ermöglichen. Hierbei bedeutet eine verbesserte Stabilität eine möglichst gering ausfallende Gewichtsänderung bei Lagerung der erfindungsgemäßen Formmassen in Hypochlorit-enthaltenden Lösungen. Ausserdem zeichnen sich die erfindungsgemäßen Formmassen durch eine verbesserte Stabilität der Mechanik, insbesondere der Reißkraft aus.

Diese Aufgabe wird mit den Merkmalen des Patentanspruchs 1 gelöst. Die abhängigen Patentansprüche beschreiben vorteilhafte Weiterbildungen.

### Begriffsdefinitionen

### Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 1874-1 (2011, (D)) festgelegten. Die darin verwendeten Abkürzungen werden im Folgenden synonym zu den IUPAC Namen der Monomere verwendet. Insbesondere kommen folgende Abkürzungen für Monomere in der vorliegenden Anmeldung vor MACM für Bis(4-amino-3-methyl-cyclohexyl)methan (auch als 3,3'-Dimethyl-4,4'-diaminodicyclohexylmethan bezeichnet, CAS-Nr. 6864-37-5), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0), PACM für Bis(4-amino-cyclohexyl)methan (auch als 4,4'-Diaminodicyclohexylmethan bezeichnet, CAS-Nr. 1761-71-3), BAC für 1,3-Bis(aminomethyl)-cyclohexan (auch als 1,3-Cyclohexandimethanamin bezeichnet, CAS-Nr. 2579-20-6) und für 1,4-Bis(aminomethyl)-cyclohexan (auch als 1,4-Cyclohexandimethanamin bezeichnet, CAS-Nr. 2549-93-1) und für deren Mischungen, IPD für Isophorondiamin (auch als 3-(Aminomethyl)-3,5,5-trimethylcyclohexanamin, 1-Amino-3-aminomethyl-3,5,5-trimethylcyclohexan oder Cyclohexanmethanamin,5-amino-1,3,5,5-trimethyl- bezeichnet, CAS-Nr. 2855-13-2), T für Terephthalsäure (CAS-Nr. 100-21-0), I für Isophthalsäure (CAS-Nr. 121-95-5), 36 für dimere Fettsäure mit 36 Kohlenstoffatomen (CAS-Nr. 68783-41-5 oder 61788-89-4), 12 für Dodecandisäure (auch als 1,10-Decandicarbonsäure bezeichnet, CAS-Nr. 693-23-2), CHD für 1,4- Cyclohexandicarbonsäure (CAS-Nr. 1076-97-7), 12 für Lactam-12 (auch als Laurinlactam bezeichnet, CAS-Nr. 947-04-6).

### Amorphe oder mikrokristalline Polyamide

Amorphe oder mikrokristalline Polyamide zeigen in der dynamischen Differenz-Kalorimetrie (engl. Differential Scanning Calorimetry, DSC) nach ISO 11357-2 (2013) bei einer Aufheizrate von 20 K/min bevorzugt eine Schmelzwärme von maximal 28 J/g, besonders bevorzugt von maximal 25 J/g, ganz besonders bevorzugt 0 bis 23 J/g.

Mikrokristalline Polyamide sind teilkristalline Polyamide und besitzen daher einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 80%, bevorzugt mindestens 85 %, besonders bevorzugt mindestens 90 % beträgt, gemessen nach ASTM D 1003-13 (2013).

Bei den für die erfindungsgemäße Polyamid-Formmasse verwendeten mikrokristallinen Polyamiden beträgt der Schmelztemperatur gemessen nach ISO 11357-3 (2013) bevorzugt maximal 255 °C.

Amorphe Polyamide weisen, verglichen mit den mikrokristallinen Polyamiden, eine geringere Schmelzwärme auf. Die amorphen Polyamide zeigen in der dynamischen Differenz-Kalorimetrie (engl. Differential Scanning Calorimetry, DSC) nach ISO 11357-2 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g.

Amorphe Polyamide besitzen auf Grund ihrer Amorphizität keine Schmelztemperatur.

Amorphe Polyamide sind transparent, d.h. ihre Lichttransmission beträgt mindestens 80 %, bevorzugt mindestens 85 %, besonders bevorzugt mindestens 90 % gemessen an 2 mm dicken Platten nach ASTM D 1003-13 (2013).

### Teilkristalline Polyamide

Im Sinne der vorliegenden Erfindung sind teilkristalline Polyamide solche Polyamide, die in der dynamischen Differenz-Kalorimetrie (engl. Differential Scanning Calorimetry, DSC) nach ISO 11357-2 (2013) bei einer Aufheizrate von 20 K/min bevorzugt eine Schmelzwärme von mindestens 30 J/g, besonders bevorzugt von mindestens 35 J/g, ganz besonders bevorzugt von mindestens 40 J/g aufweisen. Eine aus teilkristallinen Polyamiden hergestellte Platte mit einer Dicke von 2 mm ist nicht transparent, d.h. ihre Lichttransmission beträgt weniger als 80 %, bevorzugt weniger als 70 %, besonders bevorzugt weniger als 60 %, gemessen nach ASTM D 1003-13 (2013).

Teilkristalline Polyamide besitzen eine Schmelztemperatur.

### Dimere Fettsäure

Im Sinne der vorliegenden Erfindung weisen dimere Fettsäuren zumindest 28 Kohlenstoffatome (C-Atome) auf. Sie werden durch Dimerisierung ungesättigter Monocarbonsäuren zu Dicarbonsäuren gewonnen, wobei die Dimerisierung bevorzugt katalytisch durchgeführt wird. Dimere Fettsäuren gemäß vorliegender Erfindung sind Dicarbonsäuren. Bevorzugt sind die dimeren Fettsäuren teilweise gesättigt, besonders bevorzugt sind sie vollständig gesättigt.

### Mengenangaben der Monomere

Enthalten die Polyamide (A) oder (B) nur Disäuren und Diamine so ergänzen sich deren molare Anteile auf 50 Mol-% für die Summe alle Diamine und 50 Mol-% für die Summe alle Disäuren und die Summe der Diamin- und Disäure-Anteile ergibt 100 Mol-% für das Polyamid.

Enthalten die Polyamide (A) oder (B) neben Disäuren und Diaminen auch Lactame oder ω-Aminosäuren zu x Mol-%, so beträgt die Summe aller Diamine nur noch (50 - 0,5 x) Mol-% und Summe aller Disäuren (50 - 0,5 x) Mol-%, bezogen auf 100 Mol-% Polyamid.

Bei den Mengenangaben zu den Disäuren und Diaminen der Polyamide gilt immer, dass die Summe der molaren Anteile aller Diamine gleich der Summe der molaren Anteile aller Disäuren ist.

### Allgemeines zu Mengenangaben

Die Formmassen gemäß der vorliegenden Erfindung enthalten bevorzugt die Komponenten (A), (B) und gegebenenfalls (C) und/oder (D) und/oder (E), es gilt dabei die Maßgabe, dass sich die Komponenten (A), (B) und gegebenenfalls (C) und/oder (D) und/oder (E) in Summe auf 100 Gew.-% ergänzen. Die festgelegten Bereiche der Mengenangaben für die einzelnen Komponenten (A), (B), (C), (D) und (E) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe der Komponenten (A), (B) und gegebenenfalls (C) und/oder (D) und/oder (E) 100 Gew.-% ergibt.

### Hypochlorige Säure, Hypochlorit

Im Sinne der vorliegenden Erfindung werden beide Begriffe in Bezug auf wässrige Lösungen oder Beständigkeit synonym verwendet, da wässrige Lösungen davon beide Spezies in einem Gleichgewicht enthalten.

Dieses Gleichgewicht zwischen Hypochloriger Säure und Hypochlorit ist pH-Wert abhängig (siehe Bildungskinetik von Wasserdesinfektionsnebenprodukten - Dissertation von Tim Schlosser, Heidelberg 2018, Seite 36 - 37) und liegt bei einem pH von 6,8 auf Seiten der Hypochlorigen Säure. Aus dem Hägg-Diagramm für den nach DIN 19643 (Aufbereitung von Schwimm- und Badebeckenwasser) relevanten pH-Bereich 6,5 ≤ pH ≥ 7,8 (ibd., Abbildung 2.5, Seite 37) lässt sich eine Zusammensetzung von ca. 80 % Hypochlorige Säure und ca. 20 % Hypochlorit für einen pH-Wert von 6,8 ablesen.

### Hypochlorit-enthaltende Lösungen

Im Sinne der vorliegenden Erfindung umfasst der Begriff "Hypochlorit-enthaltende Lösungen" Lösungen von Hypochloritionen (z.B. einer Lösung von Natriumhypochlorit oder hypochloriger Säure) in Wasser und somit eine Mischung von Hypochloriger Säure und Hypochlorit, wobei deren Konzentrationsverhältnis pH-Wert abhängig ist.

### Hypochlorit-Lagerung

Im Sinne der vorliegenden Erfindung umfasst der Begriff "Hypochlorit-Lagerung" die Lagerung von Prüfkörpern (Zugstäben) in einer Lösung von Hypochloritionen (z.B. einer Lösung von Natriumhypochlorit oder hypochloriger Säure) in Wasser und damit in einer Mischung von Hypochloriger Säure und Hypochlorit, wobei deren Konzentrationsverhältnis pH-Wert abhängig ist.

Die vorliegende Erfindung betrifft somit die Verwendung einer Polyamid-Formmasse, umfassend oder bestehend aus
mindestens ein teilkristallines Polyamid (A), und
mindestens ein amorphes oder mikrokristallines Polyamid (B),
zur Herstellung von gegenüber wässrigen, Hypochlorige Säure und/oder deren Salzen enthaltenden Lösungen beständigen Formkörpern.

Beständig bedeutet eine Gewichtsänderung des gelagerten Formkörpers nach 8064 h Lagerung, gemessen wie auf Seite 21 beschrieben, von maximal 12 %, bevorzugt von maximal 11 % ,besonders bevorzugt von maximal 10 %
und/oder
eine Reißkraft des gelagerten Formkörpers nach 8064 h Lagerung, gemessen wie auf Seite 21 beschrieben, von mindestens 70%, bevorzugt mindestens 73 %, besonders bevorzugt mindestens 75 % des Wertes der Reißkraft des ungelagerten Prüfkörpers.

Überraschenderweise wurde bei der Suche nach geeigneten Polyamiden, die die oben genannte Aufgabe lösen können, gefunden, dass die im Anspruch 1 genannten Polyamid-Formassen eine hohe Resistenz gegenüber Hypochlorit-enthaltenden Lösungen aufweisen und somit für die erfindungsgemäßen Zwecke geeignet sind.

Die erfindungsgemäße Verwendung ermöglicht somit bevorzugt die Herstellung von gegenüber wässrigen, Hypochlorige Säure und/oder deren Salzen enthaltenden Lösungen beständigen Formkörpern.

Eine bevorzugte Ausführungsform der erfindungsgemäßen Verwendung sieht die Verwendung zur Herstellung eines Formkörpers, ausgewählt aus der Gruppe bestehend aus Bauteilen zur Förderung und/oder Aufbewahrung von Trinkwasser oder Warmwasser, Bauteilen in Schwimmbädern, Whirlpools, Heizungsanlagen oder im Sanitärbereich (Küche, Bad, Sauna, Toilette), Armaturen, Fittings, Gehäusen, Mischern, Hähnen, Filtergehäusen, Wasserzählern, Wasserzählerkomponenten (Lager, Propeller, Pilone), Ventilen, Ventilkomponenten (Gehäuse, Absperrkugel, Schieber, Zylinder), Verteilern, Kartuschen, Pumpen, Pumpenkomponenten (Schaufelräder, Impeller), Sichtscheiben, Abdeckungen, Leitungen oder Behälter sowie Bestandteile oder Elemente davon, vor.

Bei der erfindungsgemäßen Verwendung kann vorgesehen sein, dass die Polyamid-Formmasse mindestens zusätzlich mindestens einen anorganischen Füllstoff (C) und/oder gegebenenfalls mindestens einen Zusatzstoff (D), und/oder gegebenenfalls mindestens ein weiteres Polymer (E), welches verschieden vom Polyamid (A), vom Polyamid (B) und verschieden vom Zusatzstoff (D) ist, enthält.

In einer besonders bevorzugten Ausführungsform der erfindungsgemässen Verwendung weist die Polyamid-Formmasse die folgende Zusammensetzung auf:
19 bis 95 Gew.-%, bevorzugt 25 bis 89,39 Gew.-%, besonders bevorzugt 21 bis 67,9 Gew.-% mindestens ein teilkristallines Polyamid (A),
5 bis 60 Gew.-%, bevorzugt 10 bis 50 Gew.-%, besonders bevorzugt 15 bis 30 Gew.-% mindestens ein amorphes oder mikrokristallines Polyamid (B),
0 bis 70 Gew.-%, bevorzugt 0,1 bis 60 Gew.-%, besonders bevorzugt 15 bis 50 Gew.-% mindestens einen anorganischen Füllstoff (C),
0 bis 6 Gew.-%, bevorzugt 0,01 bis 5 Gew.-% und besonders bevorzugt 0,1 bis 4 Gew.-% mindestens einen Zusatzstoff (D), sowie
0 bis 20 Gew.-%, bevorzugt 0,5 bis 15 Gew.-% und besonders bevorzugt 2 bis 10 Gew.-% mindestens ein Polymer (E),
wobei sich die Komponenten (A) bis (E) auf 100 Gew.-% ergänzen.

Bei einer weiteren erfindungsgemäßen Verwendung kann vorgesehen sein, dass die Polyamid-Formmasse mindestens zusätzlich mindestens einen anorganischen Füllstoff (C) und/oder gegebenenfalls mindestens einen Zusatzstoff (D) enthält.

In einer weiteren besonders bevorzugten Ausführungsform der erfindungsgemässen Verwendung weist die Polyamid-Formmasse die folgende Zusammensetzung auf:
19 bis 95 Gew.-%, bevorzugt 25 bis 89,89 Gew.-%, besonders bevorzugt 31 bis 69,9 Gew.-% mindestens ein teilkristallines Polyamid (A),
5 bis 60 Gew.-%, bevorzugt 10 bis 50 Gew.-%, besonders bevorzugt 15 bis 30 Gew.-%mindestens ein amorphes oder mikrokristallines Polyamid (B),
0 bis 70 Gew.-%, bevorzugt 0,1 bis 60 Gew.-%, besonders bevorzugt 15 bis 50 Gew.-% mindestens einen anorganischen Füllstoff (C), sowie
0 bis 6 Gew.-%, bevorzugt 0,01 bis 5 Gew.-%, besonders bevorzugt 0,1 bis 4 Gew.-% mindestens einen Zusatzstoff (D)
wobei sich die Komponenten (A) bis (D) auf 100 Gew.-% ergänzen.

Nachfolgend werden die Komponenten (A) bis (E) näher beschrieben.

### Komponente (A)

Gemäß einer bevorzugten Ausführungsform der vorliegenden Erfindung besitzt das mindestens eine teilkristalline Polyamid (A)
eine Schmelztemperatur gemessen nach ISO 11537-3 (2013) von 120 bis 350 °C, bevorzugt 175 bis 330 °C, besonders bevorzugt von 280 bis 325 °C, und/oder
eine Schmelzwärme gemessen nach ISO 11537-3 (2013) von mindestens 30 J/g, besonders bevorzugt von mindestens 35 J/g, ganz besonders bevorzugt von mindestens 40 J/g aufweist, und/oder
eine Lichttransmission gemessen an einer Platte mit der Dicke 2 mm nach ASTM D 1003-13 (2013) von weniger als 80 %, bevorzugt weniger als 70 %, besonders bevorzugt weniger als 60 %

Gemäß einer weiteren bevorzugten Ausführungsform der vorliegenden Erfindung ist das mindestens eine teilkristalline Polyamid (A) gebildet ist aus den Monomeren (a1) bis (a2) und gegebenenfalls (a3):
(a1) mindestens eines Diamins, ausgewählt aus der Gruppe bestehend aus 1,4-Butandiamin, 1,5-Pentandiamin, 1,6-Hexandiamin, 1,8-Octandiamin, 1,9-Nonandiamin, 1,10-Decandiamin, 1,12-Dodecandiamin, 2-Methyl-1,5-Pentandiamin, 2-Methyl-1,8-octandiamin, Bis(4-amino-cyclohexyl)methan, Bis(aminomethyl)cyclohexan, Isophorondiamin und m-Xylylendiamin, und
(a2) mindestens einer Dicarbonsäure, ausgewählt aus der Gruppe bestehend aus 1,6-Hexandisäure, 1,9-Nonandisäure, 1,10-Decandisäure, 1,12-Dodecandisäure, 1,13-Tetradecandisäure, 1,14-Tetradecandisäure, 1,15-Pentadecansäure, 1,16-Hexadecandisäure, 1,17-Heptadecandisäure, 1,18-Octadecandisäure, Cyclohexandicarbonsäure, dimere Fettsäure mit 36 oder 44 C-Atomen, Isophthalsäure und Terephthalsäure, und/oder
(a3) einem oder mehreren Lactamen oder ω-Aminosäuren, ausge-wählt aus der Gruppe bestehend aus Lactam-6, Lactam-11, Lactam-12, 1,6-Aminohexansäure, 1,11-Aminoundecansäure und 1,12-Aminododecansäure.

Gemäß einer besonders bevorzugten Ausführungsform der vorliegenden Erfindung ist das mindestens eine teilkristalline Polyamid (A) ausgewählt ist aus der Gruppe bestehend aus
PA 6, PA 46, PA 49, PA 410, PA 411, PA 412, PA 413, PA 414, PA 415, PA 416, PA 417, PA 418, PA 436, PA 56, PA 510, PA 66, PA 69, PA 610, PA 611, PA 612, PA 613, PA 614, PA 615, PA 616, PA 617, PA 618, PA 1010, PA 66/6, PA 6/66/610, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA MXD6/MXDI, Polyamiden mit einer 4T-Wiederholungseinheit, Poly-amiden mit einer 5T-Wiederholungs-einheit, Polyamiden mit einer 6T-Wiederholungs-einheit, Polyamiden mit einer 8T-Wiederholungseinheit, Polyamiden mit einer 9T-Wiederholungs-einheit, Polyamiden mit einer 10T-Wiederholungseinheit, Polyamiden mit einer 12T-Wiederholungseinheit, PA 4T/6T, PA 4T/8T, PA 6T/8T, PA 4T/MPMDT, PA 4T/4I, PA 5T/5I, PA 6T/6I, PA 9T/MODT, PA 9T/9I, PA 10T, PA 10T/6T, PA 10T/6T/10I/6I, PA 12T, PA MPMDT/6T, PA 10T/10I, PA 12T/12I, PA 4T/6T/8T, PA 4T/6T/10T, PA 4T/8T/10T, PA6T/8T/10T, PA 4T/6T/MPMDT, PA 6T/6, PA 6T/66, PA 4T/66, PA 5T/66, PA 6T/6I/6, PA 10T/6T/1012/612, PA 6T/BACT, PA 6I/6T/BACI/BACT, PA 66/BAC6/MACM6, PA 66/BAC6/PACM6, PA 66/BAC6/IPD6 und deren Mischungen oder Copolymeren,
bevorzugt
PA 6, PA 66, PA 69, PA 610, PA 612, PA 616, PA 1010, PA 66/6, PA 6/12, PA 11, PA 12, PA 1212, PA MXD6, PA MXD10, PA 6T/6I, PA 9T/MODT, PA 10T, PA 10T/6T, PA 10T/6T/10I/6I, PA 12T, PA 10T/10I, PA 6T/6, PA 6T/66, PA 10T/6T/1012/612, PA 6T/BACT, PA 6I/6T/BACI/BACT, PA 66/BAC6/MACM6, PA 66/BAC6/PACM6, PA 66/BAC6/IPD6,
besonders bevorzugt
PA 6, PA 66, PA 610, PA 612, PA 616, PA 1010, PA 66/6, PA 6/12, PA 12, PA 6T/6I, PA 10T, PA 10T/6T, PA 10T/6T/10I/6I, PA 10T/10I, PA 6T/6, PA 6T/66, PA 6T/6I/6, PA 10T/6T/1012/612, PA 6T/BACT, PA 6I/6T/BACI/BACT, PA 66/BAC6/MACM6.

Die relative Viskosität des teilkristallinen Polyamids (A) bestimmt an Lösungen von 0,5 g Polyamid in 100 ml m-Kresol gemäß ISO 307 (2013) bei 20°C beträgt bevorzugt 1,40 bis 2,50, besonders bevorzugt 1,45 bis 2,30, ganz besonders bevorzugt 1,60 bis 2,15.

### Komponente (B)

Gemäß einer bevorzugten Ausführungsform der vorliegenden Erfindung besitzt das mindestens eine amorphe oder mikrokristalline Polyamid (B)
eine Schmelzwärme gemessen nach ISO 11537-3 (2013) von maximal 28 J/g, besonders bevorzugt von maximal 25 J/g, ganz besonders bevorzugt von maximal 0 bis 23J/g aufweist, und/oder
eine Lichttransmission gemessen an einer Platte mit der Dicke 2 mm nach ASTM D 1003-13 (2013) von mindestens 80 %, bevorzugt von mindestens 85 %, besonders bevorzugt von mindestens 90 %, und/oder
eine Glasübergangstemperatur gemessen nach ISO 11537-2 (2013) von 60 bis 240 °C, bevorzugt von 80 bis 230 °C, besonders bevorzugt von 105 bis 210 °C.

Gemäß einer weiteren bevorzugten Ausführungsform der vorliegenden Erfindung ist das mindestens eine amorphe oder mikrokristalline Polyamid (B) gebildet ist aus den Monomeren (b1) bis (b2) und gegebenenfalls (b3):
(b1) mindestens eines Diamins, ausgewählt aus der Gruppe bestehend aus 1,6-Hexandiamin, 1,10-Decandiamin, 1,12-Dodecandiamin, 2-Methyl-1,5-Pentandiamin, m-Xylylendiamin, Bis(4-amino-3-methyl-cyclohexyl)-methan, Bis(4-amino-cyclohexyl)methan, Bis(4-amino-3,5-dimethylcyclohexyl)methan, Bis(aminomethyl)cyclohexan ND für 2,2,4-Trimethylhexamethylendiamin und IND für 2,4,4-Trimethylhexamethylendiamin, und
(b2) mindestens einer Dicarbonsäure, ausgewählt aus der Gruppe bestehend aus 1,6-Hexandisäure, 1,10-Decandisäure, 1,12-Dodecandisäure, 1,14-Tetradecandisäure, 1,16-Hexadecandisäure, 1,18-Octadecandisäure, dimere Fettsäure mit 36 oder 44 C-Atomen, Cyclohexandicarbonsäure, Isophthalsäure, Terephthalsäure und Naphthalindicarbonsäure, und/oder
(b3) einem oder mehreren Lactamen oder ω-Aminosäuren, ausgewählt aus der Gruppe bestehend aus Lactam-6, Lactam-11, Lactam-12, 1,6-Aminohexansäure, 1,11-Aminoundecansäure und 1,12-Aminododecansäure.

Gemäß einer besonders bevorzugten Ausführungsform der vorliegenden Erfindung ist das mindestens eine amorphe oder mikrokristalline Polyamid (B) ausgewählt ist aus der Gruppe bestehend aus
PA 6I, PA 6I/6T, PA 10I/10T, PA MPMDI/MPMDT, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM16, PA MACM18, PA NDT/INDT, PA TMDC10, PA TMDC12, PA TMDC14, PA TMDC16,PA TMDC18, PA PACM12, PA PACM14, PA PACM16, PA PACM18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/MACM36, PA MACMI/MACMT/12, PA 6I/6T/MACMI/MACMT, PA 6I/6T/MACMI/MACMT/12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM16/1016, PA MACM18/1018, PA 6I/6T/MACMI/MACMT/MACM12/612, PA 6I/6T/MACMI/MACMT/MACM12, PA MACMI/MACMT/MACM12/12, PA MACMI/MACMT/MACM12, PA 6I/6T/MACMI/MACMT/12, PA 6I/6T/6N/MACMI/MACMT/MACMN, PA TMDC12/TMDCT/TMDC36, PA TMDC12/TMDCI, PA TMDC12/TMDCI/TMDC36, PA TMDC12/TMDCT, PA 6I/6T/BACI/BACT, PA MACMI/MACMT/BACI/BACT, PA 6I/6T/MACMI/MACMT/BACI/BACT, PA MACMI/MACMT/MACM12/MACM36, PA MACMI/MACMT/MACM14/MACM36, PA MACMI/MACMT/MACMCHD/MACM36, PA TMDCI/TMDCT/TMDC12/TMDC36, PA TMDCI/TMDCT/TMDC14/TMDC36, PA TMDCI/TMDCT/TMDCCHD/TMDC36 und Mischungen oder Copolymeren hiervon,
wobei das MACM bis zu maximal 35 Mol-% durch PACM und/oder TMDC ersetzt sein kann, bezogen auf die Summe der molaren Anteile aller Monomere von 100 Mol-%, und/oder
das Laurinlactam ganz oder teilweise durch Caprolactam, und oder die dimere Fettsäure mit 36 Kohlenstoffatomen ganz oder teilweise durch eine dimere Fettsäure mit 44 Kohlenstoffatomen ersetzt sein kann,
bevorzugt
PA 6I/6T, PA 10I/10T, PA MPMDI/MPMDT, PA MXDI/6I, PA MXDI/MXDT/6I/6T, PA MACM10, PA MACM12, PA MACM14, PA MACM16, PA MACM18, PA NDT/INDT, PA TMDC10, PA TMDC12, PA TMDC14, PA TMDC16,PA TMDC18, PA PACM12, PA PACM14, PA PACM16, PA PACM18, PA PACM10/11, PA PACM10/12, PA PACM12/612, PA PACM12/PACM14/612/614, PA MACMI/12, PA MACMT/12, PA MACMI/MACM12, PA 6I/MACMI/12, PA MACMI/MACMT/12, PA 6I/6T/MACMI/MACMT, PA 6I/6T/MACMI/MACMT/12, PA MACM10/1010, PA MACM14/1014, PA 6I/6T/MACMI/MACMT/MACM12/612, PA MACMI/MACMT/MACM12, PA 6I/6T/MACMI/MACMT/12, PA TMDC12/TMDCI, PA TMDC12/TMDCI/TMDC36, PA 6I/6T/BACI/BACT, PA 6I/6T/MACMI/MACMT/BACI/BACT, PA MACMI/MACMT/MACM12/MACM36, PA MACMI/MACMT/MACM14/MACM36, PA MACMI/MACMT/MACMCHD/MACM36, PA TMDCI/TMDCT/TMDC12/TMDC36, PA TMDCI/TMDCT/TMDC14/TMDC36, PA TMDCI/TMDCT/TMDCCHD/TMDC36 und Mischungen oder Copolymeren hiervon,
wobei das MACM bis zu maximal 35 Mol-% durch PACM und/oder TMDC ersetzt sein kann, bezogen auf die Summe der molaren Anteile aller Monomere von 100 Mol-%, und/oder
das Laurinlactam ganz oder teilweise durch Caprolactam, und oder die dimere Fettsäure mit 36 Kohlenstoffatomen ganz oder teilweise durch eine dimere Fettsäure mit 44 Kohlenstoffatomen ersetzt sein kann,
besonders bevorzugt
PA 6I/6T, PA 10I/10T, PA MXDI/6I, PA MACM10, PA MACM12, PA MACM14, PA MACM16, PA MACM18, PA TMDC10, PA TMDC12, PA TMDC14, PA TMDC16,PA TMDC18, PA PACM12, PA PACM14, PA PACM16, PA PACM18, PA PACM10/11, PA PACM10/12, PA PACM12/612, PA PACM12/PACM14/612/614, PA MACMI/12, PA MACMT/12, PA MACMI/MACM12, PA 6I/MACMI/12, PA MACMI/MACMT/12, PA 6I/6T/MACMI/MACMT/MACM12/612, PA MACMI/MACMT/MACM12, PA 6I/6T/MACMI/MACMT/12, PA TMDC12/TMDCI, PA TMDC12/TMDCI/TMDC36, PA MACMI/MACMT/MACM12/MACM36, PA MACMI/MACMT/MACM14/MACM36, PA TMDCI/TMDCT/TMDC12/TMDC36, PA TMDCI/TMDCT/TMDC14/TMDC36, und Mischungen oder Copolymeren hiervon,
wobei das MACM bis zu maximal 35 Mol-% durch PACM und/oder TMDC ersetzt sein kann, bezogen auf die Summe der molaren Anteile aller Monomere von 100 Mol-%, und/oder
das Laurinlactam ganz oder teilweise durch Caprolactam, und oder die dimere Fettsäure mit 36 Kohlenstoffatomen ganz oder teilweise durch eine dimere Fettsäure mit 44 Kohlenstoffatomen ersetzt sein kann.

In den amorphen Polyamiden PA 6I/6T, PA 10I/10T beträgt der Anteil an Isophthalsäure bevorzugt 53 bis 90 Mol-%, besonders bevorzugt bis 55 bis 80 Mol-%. Ganz besonders bevorzugt beträgt das Mol-Verhältnis Isophthalsäure zu Terephthalsäure 65: 35 bis 70:30.

Der Anteil des 1,6-Hexandiamins im amorphen PA MXDI/6I beträgt bevorzugt 15 bis 40 Mol-%, besonders bevorzugt 20 bis 35 Mol-%, wobei die Summe der molaren Anteile aller Monomere 100 Mol-% ergibt. Insbesondere bevorzugt besitzt das PA MXDI/6I das Molverhältnis 46/54.

Der Anteil des 1,6-Hexandiamins im PA PACM12/612 beträgt bevorzugt 2 bis 24 Mol-% und besonders bevorzugt 6 bis 15 Mol-% beträgt, wobei die Summe der molaren Anteile aller Monomere 100 Mol-% ergibt. Die Polyamide PA PACM12/612 mit maximal 24 Mol-% 1,6-Hexandiamin sind mikrokristallin.

Der Anteil des 1,6-Hexandiamins im PA PACM12/PACM14/612/614 beträgt bevorzugt 2 bis 24 Mol-% und besonders bevorzugt 6 bis 15 Mol-% und/oder der Anteil an 1,14-Tetradecandisäure beträgt 2 bis 24 Mol-% und bevorzugt 6 bis 15 Mol-%, wobei die Summe der molaren Anteile aller Monomere 100 Mol-% ergibt. Die Polyamide PA PACM12/PACM14/612/614 mit maximal 24 Mol-% 1,6-Hexandiamin sind mikrokristallin.

Der Anteil des Laurinlactams im amorphen PA MACMI/12 beträgt bevorzugt 15 bis 50 Mol-%, besonders bevorzugt 20 bis 40 Mol-% und ganz besonders bevorzugt 19 Mol % oder 35 Mol-%, wobei die Summe der molaren Anteile aller Monomere 100 Mol-% ergibt.

Im amorphen PA MACMI/MACMT/12 ist der Anteil an Isophthalsäure bevorzugt gleich dem Anteil an Terephthalsäure und/oder der Anteil an Laurinlactam beträgt bevorzugt 15 bis 40 Mol-% und besonders bevorzugt 20 bis 30 Mol-%, ganz besonders bevorzugt ist das Molverhältnis der Wiederholungseinheiten MACMI/MACMT/12 = 38/38/24, wobei die Summe der molaren Anteile aller Monomere 100 Mol-% ergibt.

Im amorphen PA MACMI/MACMT/MAMC12 ist der Anteil an Isophthalsäure bevorzugt gleich dem Anteil an Terephthalsäure und/oder der Anteil an Dodecandisäure beträgt bevorzugt 30 bis 60 Mol-% und besonders bevorzugt 40 bis 50 Mol-%, ganz besonders bevorzugt ist das Molverhältnis der Wiederholungseinheiten MACMI/MACMT/MACM12 = 27/27/46, wobei die Summe der molaren Anteile aller Monomere 100 Mol-% ergibt.

Im amorphen PA 6I/6T/MACMI/MACMT/12 ist der Anteil an Isophthalsäure ist bevorzugt gleich dem Anteil an Terephthalsäure und/oder der Anteil an Laurinlactam beträgt bevorzugt 1 bis 25 Mol-%, besonders bevorzugt 2 bis 15 Mol-%, ganz besonders bevorzugt ist das Molverhältnis der Wiederholungseinheiten 6I/6T/MACMI/MACMT/12 = 34/34/14/14/4 oder 39/39/9,6/9,6/2,8, wobei die Summe der molaren Anteile aller Monomere 100 Mol-% ergibt.

In den Polyamiden PA MACM10/PACM10, PA MACM12/PACM12, PA MACM14/PACM14, PA MACM16/PACM16, PA MACM18/PACM18 beträgt der Anteil von PACM bevorzugt 1 bis 35 Mol-% und besonders bevorzugt 2 bis 25 Mol-%, wobei die Summe der molaren Anteile aller Monomere 100 Mol-% ergibt. Die Polyamide PA MACM10/PACM10, PA MACM12/PACM12 bzw. PA MACM14/PACM14 PA MACM16/PACM16, PA MACM18/PACM18 mit maximal 25 Mol-% PACM sind amorph.

Im amorphen PA 6I/6T/MACMI/MACMT/PACMI/PACMT/12 ist der Anteil an Isophthalsäure bevorzugt gleich dem Anteil an Terephthalsäure und/oder der Anteil an Laurinlacam beträgt bevorzugt 2 bis 15 Mol-%, besonders bevorzugt 2 bis 7 Mol-% und/oder der Anteil an PACM beträgt bevorzugt 2 bis 7 Mol-%, wobei die Summe der molaren Anteile aller Monomere 100 Mol-% ergibt.

In den amorphen Polyamiden PA MACMI/MACMT/MACM12/MACM36, PA MACMI/MACMT/MACM14/MACM36 ist der molare Anteil der Isophthalsäure bevorzugt mindestens gleich dem molaren Anteil an Terephthalsäure und der Anteil an Isophthalsäure beträgt bevorzugt 6 bis 49,55 Mol-%, besonders bevorzugt 7 bis 43,5 Mol-%, ganz besonders bevorzugt 11,5 bis 27 Mol-% und/oder der Anteil an Terephthalsäure beträgt bevorzugt 0,1 bis 24,775 Mol-%, besonders bevorzugt 0,5 bis 22 Mol-% ganz besonders bevorzugt 11,5 bis 19,25 Mol-% und/oder der Anteil der 1,12-Dodecandisäure oder 1,14-Tetradecandisäure beträgt bevorzugt 0,1 bis 37,75 Mol-%, besonders bevorzugt 5 bis 35 Mol-%, ganz besonders bevorzugt 10 bis 25,5 Mol-% und/oder der Anteil der dimeren Fettsäure mit 36-Kohlenstoffatomen beträgt bevorzugt 0,25 bis 10 Mol-%, besonders bevorzugt 1 bis 7,5 Mol-%, ganz besonders bevorzugt 1,5 bis 4,4 Mol-%.

In den amorphen Polyamiden PA TMDCI/TMDCT/TMDC12/TMDC36, PA TMDCI/TMDCT/TMDC14/TMDC36 ist der molare Anteil der Isophthalsäure bevorzugt mindestens gleich dem molaren Anteil an Terephthalsäure und der Anteil an Isophthalsäure beträgt bevorzugt 6 bis 49,55 Mol-%, besonders bevorzugt 7 bis 43,5 Mol-%, ganz besonders bevorzugt 11,5 bis 27 Mol-% und/oder der Anteil an Terephthalsäure beträgt bevorzugt 0,1 bis 24,775 Mol-%, besonders bevorzugt 0,5 bis 22 Mol-% ganz besonders bevorzugt 11,5 bis 19,25 Mol-% und/oder der Anteil der 1,12-Dodecandisäure oder 1,14-Tetradecandisäure beträgt bevorzugt 0,1 bis 37,75 Mol-%, besonders bevorzugt 5 bis 35 Mol-%, ganz besonders bevorzugt 10 bis 25,5 Mol-% und/oder der Anteil der dimeren Fettsäure mit 36-Kohlenstoffatomen beträgt bevorzugt 0,25 bis 10 Mol-%, besonders bevorzugt 1 bis 7,5 Mol-%, ganz besonders bevorzugt 1,5 bis 4,4 Mol-%.

Die relative Viskosität des amorphen oder mikrokristallinen Polyamids (B) bestimmt an Lösungen von 0,5 g Polyamid in 100 ml m-Kresol gemäß ISO 307 (2013) bei 20°C beträgt bevorzugt 1,35 bis 2,15, besonders bevorzugt 1,40 bis 2,00 und ganz besonders bevorzugt 1,45 und 1,90.

### Komponente (C)

Der Begriff Füllstoffe (C) umfasst faser- oder nadelförmige Füllstoffe, teilchenförmige Füllstoffe und Mischungen davon.

Die Füllstoffe können vorzugsweise beschichtet oder oberflächenbehandelt sein, d.h. sie können mit einem geeigneten Schlichte- oder Haftvermittlersystem ausgerüstet oder anderweitig oberflächenaktiviert sein. Dazu können zum Beispiel Systeme auf Basis von Urethanen, Silanen, Epoxiden, Polyamiden, Polyhydroxyether, Acrylaten respektive Kombinationen oder Mischungen davon verwendet werden. Die Schlichte- oder Haftvermittlersysteme können auch noch andere Hilfsmittel wie zum Beispiel Antistatika oder Gleitmittel enthalten.

Die faser- oder nadelförmigen Füllstoffe sind vorzugsweise ausgewählt aus der Gruppe bestehend aus Glasfasern, Kohlenstofffasern, Basaltfasern, Borfasern, Schlackenfasern, Metallfasern, Whiskers, Mineralfasern, Wollastonit, Aramidfasern, gemahlenen Glasfasern, gemahlenen Kohlenstofffasern, gemahlenen Mineralfasern und Mischungen hiervon. Besonders bevorzugt werden die faser- oder nadelförmigen Füllstoffe aus der Gruppe bestehend aus Glasfasern, Kohlenstofffasern, Basaltfasern, Borfasern, Aramidfasern und Mischungen hiervon ausgewählt. Ganz besonders bevorzugt werden als faser- oder nadelförmige Füllstoffe ausschließlich Glasfasern eingesetzt.

Bei den Glas- oder Kohlenstoffasern können Schnittfasern oder Endlosfasern (Roving) verwendet werden.

Die Glas- oder Kohlenstofffasern weisen einen Querschnitt auf, der kreisförmig (rund), oval, elliptisch, mit Einschnürung(en) elliptisch (sogenannte Kokon- oder cocoon-Fasern), eckig oder rechteckig ist. Fasern mit nichtkreisförmigen Querschnitt, insbesondere ovale, elliptische, mit Einschnürung(en) elliptisch (sogenannte Kokon- oder cocoon-Fasern), eckige oder rechteckige Fasern werden auch als flache Fasern bezeichnet. Es können auch Mischungen von kreisförmigen und nichtkreisförmigen Fasern eingesetzt werden.

Das Erscheinungsbild der Glasfasern kann gestreckt oder spiralförmig sein.

Es können Glasfasern aus allen Glassorten, wie z.B. A-, C-, D-, E-, E-CR-, L-, LD-, M-, NE-, S-, R-, AR-Glas, oder beliebigen Mischungen davon eingesetzt werden. Bevorzugt sind Glasfasern aus E-Glas, S-Glas oder Mischungen mit E- und/oder S-Glasfasern.

Die Schnittglasfasern besitzen eine faserlänge von 1 bis 50 mm, vorzugsweise von 1 bis 25 mm, bevorzugt 1.5 bis 20 mm, besonders bevorzugt 2 bis 12 mm und ganz besonders bevorzugt von 2 bis 8 mm.

Die Glasfasern weisen vorzugsweise einen Durchmesser von 5 bis 20 µm, bevorzugt von 5 bis 15 µm und besonders bevorzugt von 6 bis 12 µm auf.

Werden die Glasfasern als Endlosfasern (Roving) beim Pultrusionsverfahren eingesetzt, weisen sie vorzugsweise einen Durchmesser von maximal 20 µm, bevorzugt von maximal 18 µm, besonders bevorzugt von 10 bis 17 µm auf.

Die Kohlenstofffasern weisen vorzugsweise einen Durchmesser von 3 bis 12 µm, bevorzugt 4 bis 10 µm, besonders bevorzugt 4 bis 9 µm auf.

Bei flachen Fasern beträgt das Aspektverhältnis, d.h. das Verhältnis der Hauptquerschnittsachse zur Nebenquerschnittsachse 1,5 bis 8, bevorzugt 2 bis 6, besonders bevorzugt 2,5 bis 5, ganz besonders bevorzugt 3 bis 4. Unter den flachen Fasern sind flache Glasfasern besonders bevorzugt. Die Querschnittsachsen der flachen Glasfasern sind 3 bis 40 µm lang. Bevorzugt beträgt die Länge der Nebenquerschnittsachse 3 bis 20 µm, besonders bevorzugt 4 bis 10 µm und die Länge der Hauptquerschnittsachse 6 bis 40 µm, besonders bevorzugt 12 bis 30 µm.

Die teilchenförmigen Füllstoffe sind vorzugsweise ausgewählt aus der Gruppe bestehend aus Dolomit, Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, permanentmagnetischen oder magnetisierbaren Metallen oder Legierungen, Glasflakes, Glaskugeln, Hohlglaskugeln, hohlkugeligen Silikatfüllstoffen und Mischungen hiervon. Besonders bevorzugt werden die teilchenförmigen Füllstoffe aus der Gruppe bestehend aus Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, Glasflakes, Glaskugeln, Hohlglaskugeln, hohlkugeligen Silikatfüllstoffen und Mischungen hiervon ausgewählt. Ganz besonders bevorzugt werden die teilchenförmigen Füllstoffe aus der Gruppe bestehend aus Silikaten, Talkum, Glimmer, Kaolin, Titandioxid, gemahlenem oder gefälltem Calciumcarbonat, Kreide, Kalksteinmehl, Schiefermehl, synthetischen Schichtsilikaten, natürlichen Schichtsilikaten, Glasflakes, Glaskugeln, Hohlglaskugeln und Mischungen hiervon ausgewählt.

Bevorzugt wird in der erfindungsgemäßen Polyamid-Formmasse als Füllstoff (Komponente (C)) mindestens ein faser- oder nadelförmigen Füllstoff oder eine Mischung mindestens eines faser- oder nadelförmigen Füllstoffs mit mindestens einem teilchenförmigen Füllstoff eingesetzt.

Wird eine Mischung aus mindestens einem faser- oder nadelförmigen Füllstoff mit mindestens einem teilchenförmigen Füllstoff verwendet, macht der Anteil des teilchenförmigen Füllstoffs maximal die Hälfte, bevorzugt maximal ein Drittel, besonders bevorzugt maximal ein Viertel der gesamten Menge des Füllstoffs aus.

Besonders bevorzugt werden in der erfindungsgemäßen Polyamid-Formmasse als Füllstoff ausschließlich faser- oder nadelförmige Füllstoffe eingesetzt.

### Komponente (D)

Gemäß einer bevorzugten Ausführungsform der vorliegenden Erfindung ist der mindestens eine Zusatzstoff (D) ausgewählt aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Kohlenstoffnanoröhrchen, photochromen Agenzien, Antistatika, Entformungsmitteln, Antiblockmitteln, kettenverlängernden Additiven, kettenverkürzenden Additiven, optischen Aufhellern, IR-Absorbern, NIR-Absorbern und Mischungen davon.

Bei den organischen Stabilisatoren sind Phenol-, Phosphit-, Phosphonit-Verbindungen, Stabilisatoren auf Basis eines gehinderten Amins (HALS) oder deren Mischungen besonders bevorzugt.

Der mindestens eine Zusatzstoff kann auch in Masterbatchform zugegeben werden. Bevorzugt wird als Basispolymer des Masterbatches ein Polyamid verwendet. Dieses Polyamid ist vorzugsweise ausgewählt aus der Gruppe bestehend aus den PA 12, PA 1010, PA 1012, PA 1212, PA 6/12, PA 612, PA MACM12 und deren Mischungen oder besteht aus dem Polyamid (A) und/oder dem Polyamid (B) selbst.

Ganz besonders bevorzugt handelt es sich bei dem Basispolymeren des Masterbatches um das Polyamid (A) oder Polyamid (B) selbst.

Die vorliegende Erfindung wird anhand der nachfolgenden Ausführungen und Versuche näher erläutert, ohne die Erfindung allerdings auf die dargestellten speziellen Ausführungsformen zu beschränken.

### Komponente (E)

Gemäß einer bevorzugten Ausführungsform der vorliegenden Erfindung ist das mindestens eine weitere Polymer (E) ausgewählt aus der Gruppe bestehend aus Fremdpolymeren, Schlagzähmodifikatoren und Mischungen davon. Besonders bevorzugt ist das mindestens eine weitere Polymer (E) ausgewählt aus der Gruppe bestehend aus Schlagzähmodifikatoren und deren Mischungen.

### Messmethoden

### Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Glasübergangstemperatur (Tg) und Schmelztemperatur

Die Bestimmung erfolgte nach ISO 11357-2 und -3 (2013) an Granulat mit einem Wassergehalt von unter 0,1 Gew.-%..

Die Differential Scanning Calorimetry (DSC) wurde bei jeder der beiden Aufheizungen mit einer Aufheizrate von 20 K/min durchgeführt. Nach der ersten Aufheizung wurde die Probe in Trockeneis abgeschreckt. Der Schmelzpunkt wurde bei der zweiten Aufheizung bestimmt.

Als Schmelztemperatur wird die Temperatur am Peakmaximum angegeben. Der Mittelpunkt des Glasübergangsbereichs, welcher als Glasübergangstemperatur (Tg) angegeben wird, wurde nach der Methode "Half height" ermittelt.

### Gewichtsänderung

Die Bestimmung der Gewichtsänderung erfolgte an gelagerten ISO-Zugstäben. Von der Gewichtsänderung der in der wässrigen Hypochlorit-Lösung gelagerten Zugstäben wurde die Gewichtsänderung von nur in Wasser gelagerten Zugstäben subtrahiert. Dadurch wurde die bei der Lagerung in wässriger Hypochlorit-Lösung ebenfalls auftretende Gewichtszunahme durch Wasseraufnahme eliminiert.

### Reißkraft

Die Bestimmung der Reißkraft erfolgte an in wässriger Hypochlorit-Lösung gelagerten ISO-Zugstäben (Typ A1, Masse 170 x 20/10 x 4) hergestellt gemäß der Norm: ISO/CD 3167 (2003).

Die Messung wurde analog zur Messung der Reißfestigkeit gemäß ISO 527 (2012) bei 23°C mit einer Zuggeschwindigkeit von 50 mm/min bei unverstärkten und 5 mm/min bei verstärkten Materialien durchgeführt. Die absolute Kraft wurde als Messwert direkt verwendet, d.h. ohne Division durch die Querschnittsfläche des Prüfkörpers.

### Lichttransmission

Die Lichttransmission wurde bei 23 °C gemäß der ASTM D 1003-13 (2013) an 60 x 60 mm Platten (Breite x Länge) mit 2 mm Dicke und Filmanguss auf einem "Haze Gard plus" der Firma Byk Gardner mit CIE Lichtart C ermittelt. Der Lichttransmissionswert wurde in % der eingestrahlten Lichtmenge angegeben.

### Lagerungsbedingungen

Die Probenentnahme fand bei beiden Lagerungen zu den gleichen Zeitpunkten statt, und zwar jeweils nach 1344 h, 4032 h, 5376 h, 6720 h und 8064 h. Pro Material und Lagerungszeit wurden jeweils 5 ISO-Zugstäbe (Typ A1, Masse 170 x 20/10 x 4, hergestellt gemäß der Norm: ISO/CD 3167 (2003)) gelagert und das arithmetische Mittel der 5 Messwerte gebildet.

Die Wasser-Lagerung erfolgte bei thermostatgeregelten 60 °C in deionisiertem Wasser.

Die Hypochlorit-Lagerung erfolgte bei thermostatgeregelten 60 °C in einer wässrigen Natrium-Hypochlorit-Lösung mit einer Konzentration von 10 mg/l in einem Test-Stand der Fa. HyperDES-watertechnology GmbH, Crailsheim, Deutschland mit einem Volumen von 100 l. Die Natrium-Hypochlorit-Lösung wird darin mit 6 bis 8 l/min umgewälzt, wobei die Lösung auf einen pH-Wert von 6,8 und einer Leitfähigkeit von 600 bis 1200 µS eingestellt wird. Die Natrium-Hypochlorit-Konzentration, der pH-Wert und die Leitfähigkeit werden während der gesamten Lagerungsdauer automatisch durch Zugabe von 0,5 Gew.-%iger Natrium-Hypochlorit-Lösung, 0,7 Gew.-%iger NatriumhydroxydLösung, 0,7 Gew.-%iger Schwefelsäure bzw. deionisiertem Wasser geregelt. Der pH-Wert und die Natrium-Hypochlorit-Konzentration werden zusätzlich einmal pro Woche mit dem CHEMATEST 20s (erhältlich von der Fa. Swan Analytische Instrumente AG, Hinwil, Schweiz) mittels kolorimetrischem Verfahren mit N,N-Diethyl-1,4-Phenylendiamin nach DIN EN ISO 7393-2 (2012) überprüft.

### Herstellung der Prüfkörper

Zur Herstellung der Prüfkörper wurde Granulat mit einem Wassergehalt von weniger als 0,1 Gew.-% verwendet.

Die ISO-Zugstäbe wurden auf einer Spritzgussmaschine der Firma Arburg, Modell Allrounder 420 C 1000-250 hergestellt. Dabei wurden vom Einzug zur Düse auf- und absteigende Zylindertemperaturen verwendet.

**Beispiel 1 und Vergleichsbeispiel 2**

| | |
|---|---|
| Zylindertemperaturen: | 310/315/320/325/330/325 °C |
| Werkzeugtemperatur: | 120 °C |

**Beispiele 3, 4 und Vergleichsbeispiel 5**

| | |
|---|---|
| Zylindertemperaturen: | 320/325/330/335/340/330 °C |
| Werkzeugtemperatur: | 140 °C |

**Beispiele 6,7 und 8**

| | |
|---|---|
| Zylindertemperaturen: | 290/295/300/305/310/300 °C |
| Werkzeugtemperatur: | 80 °C |

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel, gelagert.

**Tabelle 1: In den Beispielen und Vergleichsbeispielen verwendete Materialien**

| **Komponenten** | **Beschreibung** | **Hersteller** |
|---|---|---|
| Polyamid (A1) 10T/6T | Teilkristallines Polyamid aus 1,10-Decandiamin (41 Mol-%), 1,6-Hexandiamin (9 Mol-%) und Terephthalsäure (50 Mol-%) | EMS-CHEMIE AG, Schweiz |
| | Relative Viskosität* 1,63 | |
| | Schmelztemperatur 295 °C | |
| Polyamid (A2) 6T/6I | Teilkristallines Polyamid aus 1,6-Hexandiamin (50 Mol-%), Terephthalsäure (35 Mol-%) und Isophthalsäure (15 Mol-%) Relative Viskosität* 1,62 (gemessen mit 0,5 g in 100 ml m-Kresol bei 20 °C) | EMS-CHEMIE AG, Schweiz |
| | Schmelztemperatur 325 °C | |
| Polyamid 12 (A3) | Teilkristallines Polyamid 12 aus Laurinlactam | EMS-CHEMIE AG, Schweiz |
| | Relative Viskosität* 1,58 | |
| | Schmelztemperatur 178 °C | |
| Polyamid (B1) MACMI/MACMT/12 | Amorphes Polyamid aus Bis(4-amino-3-methyl-cyclohexyl)-methan (38,0 Mol-%), Isophthalsäure (19,0 Mol-%), Terephthalsäure (19,0 Mol-%) und Laurinlactam (24,0 mol-%) | EMS-CHEMIE AG, Schweiz |
| | Relative Viskosität* 1,56 | |
| | Glasübergangstemperatur 194 °C | |
| | Lichttransmission 93 % | |
| Polyamid (B2) MACMI/12 | Amorphes Polyamid aus Bis(4-amino-3-methyl-cyclohexyl)-methan (32,5 Mol-%), Isophthalsäure (32,5 Mol-%) und Laurinlactam (35 Mol-%) | EMS-CHEMIE AG, Schweiz |
| | Relative Viskosität* 1,56 (gemessen mit 0,5 g in 100 ml m-Kresol bei 20 °C) | |
| | Glasübergangstemperatur 160 °C | |
| | Lichttransmission 94 % | |
| Glasfaser | runde Glasfaser, 3 mm lang | Chongqing Polycomp International Corp., China |
| | Durchmesser 10 µm | |
| | Handelsname: CPIC ECT 301HP | |
| Stabilisator | Pentaerythritoltetrakis-[3-(3,5-di-tert-butyl-4-hydroxyphenyl)-propionate, Antioxidans auf Basis eines sterisch gehinderten Phenols | BASF SE, Deutschland |
| | CAS: 6683-19-8 | |
| | Handelsname: Irganox 1010 | |

| | | |
|---|---|---|
| * Relative Viskosität, gemessen an einer Lösung aus 0,5 g Polyamid in 100 ml m-Kresol bei 20 °C | | |

**Tabelle 2: Versuchsergebnisse - Gewichtsänderung in %**

| | **Einheit** | **Beispiel** | **Vergleichsbeispiel** | **Beispiele** | | **Vergleichsbeispiel** | **Beispiele** | | |
|---|---|---|---|---|---|---|---|---|---|
| | | **1** | **2** | **3** | **4** | **5** | **6** | **7** | **8** |
| **Polyamid (A1) 10T/6T** | Gew.-% | 29.75 | 49.75 | | | | - | - | - |
| **Polyamid (A2) 6T/6I** | Gew.-% | - | - | 29.75 | 45 | 59.75 | - | - | - |
| **Polyamid 12 (A3)** | Gew.-% | - | - | | | | 19.75 | 24.75 | 29.75 |
| **Polyamid (B1) MACMI/MACMT/12** | Gew.-% | 20 | - | - | - | - | 30 | 25 | 20 |
| **Polyamid (B2) MACMI/12** | Gew.-% | - | - | 30 | 15 | - | - | - | - |
| **Glasfaser** | Gew.-% | 50 | 50 | 40 | 40 | 40 | 50 | 50 | 50 |
| **Stabilisator** | Gew.-% | 0.25 | 0.25 | 0.25 | 0.25 | 0.25 | 0.25 | 0.25 | 0.25 |

| **Lagerungsdauer [h]** | | | | | | | | | |
|---|---|---|---|---|---|---|---|---|---|
| 0 | % | 0 | 0 | 0 | 0 | 0 | 0 | 0 | 0 |
| 1344 | % | -0.17 | -1.97 | -0.28 | -0.63 | -0.79 | -0.16 | -0.21 | -0.33 |
| 2688 | % | -0.48 | -5.41 | 0.74 | -1.03 | -2.42 | 0.14 | -0.64 | -1.33 |
| 4032 | % | -2.25 | -7.84 | -2.96 | -2.81 | -4.13 | -1.03 | -1.22 | -2.61 |
| 5376 | % | -3.74 | -11.15 | -3.84 | -4.25 | n.g. | -1.94 | -2.50 | -4.78 |
| 6720 | % | -4.86 | -13.43 | -5.41 | -6.14 | -11.99 | -2.62 | -2.93 | -6.89 |
| 8064 | % | -5.81 | -15.89 | -6.26 | -7.61 | -14.05 | -3.05 | -3.69 | -8.03 |

| | | | | | | | | | |
|---|---|---|---|---|---|---|---|---|---|
| n.g. nicht gemessen | | | | | | | | | |

**Tabelle 3: Versuchsergebnisse - Reißkraft in N und in % des Ausgangswertes**

| | **Einheit** | **Beispiel** | | **Vergleichsbeispiel** | | **Beispiele** | | | | **Vergleichsbeispiel** | | **Beispiele** | | | | | |
|---|---|---|---|---|---|---|---|---|---|---|---|---|---|---|---|---|---|
| | | **1** | | **2** | | **3** | | **4** | | **5** | | **6** | | **7** | | **8** | |
| **Polyamid (A1) 10T/6T** | Gew.-% | 29.75 | | 49.75 | | - | | - | | - | | - | | - | | - | |
| **Polyamid (A2) 6T/6I** | Gew.-% | - | | - | | 29.75 | | 45 | | 59.75 | | - | | - | | - | |
| **Polyamid 12 (A3)** | Gew.-% | - | | - | | - | | - | | - | | 19.75 | | 24.75 | | 29.75 | |
| **Polyamid (B1) MACMI/MACMT/12** | Gew.-% | 20 | | - | | - | | - | | - | | 30 | | 25 | | 20 | |
| **Polyamid (B2) MACMI/12** | Gew.-% | - | | - | | 30 | | 15 | | - | | - | | - | | - | |
| **Glasfaser** | Gew.-% | 50 | | 50 | | 40 | | 40 | | 40 | | 50 | | 50 | | 50 | |
| **Stabilisator** | Gew.-% | 0.25 | | 0.25 | | 0.25 | | 0.25 | | 0.25 | | 0.25 | | 0.25 | | 0.25 | |

| **Lagerungs-dauer [h]** | | | | | | | | | | | | | | | | | |
|---|---|---|---|---|---|---|---|---|---|---|---|---|---|---|---|---|---|
| | - | N | % | N | % | N | % | N | % | N | % | N | % | N | % | N | % |
| 0 | - | 8914 | 100 | 8352 | 100 | 7665 | 100 | 8063 | 100 | 9731 | 100 | 7326 | 100 | 7355 | 100 | 7162 | 100 |
| 1344 | - | 7482 | 84 | 6573 | 79 | 6330 | 83 | 6667 | 83 | 8059 | 83 | 6425 | 88 | 6541 | 89 | 6346 | 89 |
| 2688 | - | 7341 | 82 | 6096 | 73 | 6276 | 82 | 6428 | 80 | 7628 | 78 | 6571 | 90 | 6527 | 89 | 6456 | 90 |
| 4032 | - | 7261 | 81 | 5831 | 70 | 6106 | 80 | 6327 | 78 | 7432 | 76 | 6454 | 88 | 6521 | 89 | 6060 | 85 |
| 5376 | - | 7095 | 80 | 5598 | 67 | 6046 | 79 | 6275 | 78 | n.g. | n.g. | 6563 | 90 | 6530 | 89 | 6127 | 86 |
| 6720 | - | 7153 | 80 | 5330 | 64 | 5953 | 78 | 6276 | 78 | 6807 | 70 | 6518 | 89 | 6345 | 86 | 6060 | 85 |
| 8064 | - | 7006 | 79 | 4904 | 59 | 5981 | 78 | 6060 | 75 | 6543 | 67 | 6418 | 88 | 6388 | 87 | 5759 | 80 |

| | | | | | | | | | | | | | | | | | |
|---|---|---|---|---|---|---|---|---|---|---|---|---|---|---|---|---|---|
| n.g. nicht gemessen | | | | | | | | | | | | | | | | | |

Wie aus den Versuchen hervorgeht, zeigt sich überraschenderweise, dass lediglich die Polyamid-Formmassen mit Mischungen aus teilkristallinem Polyamid (A) und amorphem Polyamid (B) (Beispiele 1, 3, 4 und 6 bis 8) Stabilität gegenüber Hypochloritlauge aufweisen.

So konnte überaschenderweise gefunden werden, dass bei Lagerung eines Formkörpers in Hypochlorit enthaltender wässriger Lösung bei den Polyamid-Formmassen mit Mischungen aus teilkristallinem Polyamid (A) und amorphem Polyamid (B) ein deutlich geringerer Gewichtsverlust als bei den Polyamid-Formmassen mit nur teilkristallinem Polyamid (A) (Vergleichsbeispiele 2 und 5) zu verzeichnen ist (Tabelle 2). Die Gewichtsabnahme lässt einen oxidativen Abbau der Polyamid-Formmasse und somit deren Schädigung vermuten. Diese Schädigung fällt also bei den Polyamid-Formmassen der erfindungsgemässen Beispiele deutlich geringer aus als bei den Polyamid-Formmassen der Vergleichsbeispiele.

Dieser Befund wird durch die Messung der Reißkraft nach Kontakt mit hypochlorit-haltigen Lösungen bestätigt (Tabelle 3). Polyamid-Formmassen mit Mischungen aus teilkristallinem Polyamid (A) und amorphem Polyamid (B) (Beispiele 1, 3, 4 und 6 bis 8) zeigen bei Kontakt mit hypochlorit-haltigen Lösungen eine deutlich bessere Beständigkeit der Reißkraft als Polyamid-Formmassen mit nur teilkristallinem Polyamid (A) (Vergleichsbeispiele 2 und 5).

## Patentansprüche

1. Verwendung einer Polyamid-Formmasse, umfassend oder bestehend aus
mindestens ein teilkristallines Polyamid (A), und
mindestens ein amorphes oder mikrokristallines Polyamid (B),
zur Herstellung von gegenüber wässrigen, Hypochlorige Säure und/oder deren Salzen enthaltenden Lösungen beständigen Formkörpern.

2. Verwendung nach Anspruch 1, zur Herstellung eines Formkörpers, ausgewählt aus der Gruppe bestehend aus Bauteilen zur Förderung und/oder Aufbewahrung von Trinkwasser oder Warmwasser, Bauteilen in Schwimmbädern, Whirlpools, Heizungsanlagen oder im Sanitärbereich (Küche, Bad, Sauna, Toilette), Armaturen, Fittings, Gehäusen, Mischern, Hähnen, Filtergehäusen, Wasserzählern, Wasserzählerkomponenten (Lager, Propeller, Pilone), Ventilen, Ventilkomponenten (Gehäuse, Absperrkugel, Schieber, Zylinder), Verteilern, Kartuschen, Pumpen, Pumpenkomponenten (Schaufelräder, Impeller), Sichtscheiben, Abdeckungen, Leitungen oder Behälter sowie Bestandteile oder Elemente davon.

3. Verwendung nach einem der vorhergehenden Ansprüche, **dadurch gekennzeichnet, dass** das mindestens eine teilkristallines Polyamid (A) eine Schmelztemperatur gemessen nach ISO 11537-3 (2013) von 120 bis 350 °C aufweist.

4. Verwendung nach einem der vorhergehenden Ansprüche, **dadurch gekennzeichnet, dass** das mindestens eine teilkristallines Polyamid (A) eine Schmelzwärme gemessen nach ISO 11537-3 (2013) von mindestens 30 J/g, besonders bevorzugt von mindestens 35 J/g, ganz besonders bevorzugt von mindestens 40 J/g aufweist, und/oder eine Lichttransmission gemessen an einer Platte mit der Dicke 2 mm nach ASTM D 1003-13 (2013) von weniger als 80 %, bevorzugt weniger als 70 %, besonders bevorzugt weniger als 60 % aufweist.

5. Verwendung nach einem der vorhergehenden Ansprüche, **dadurch gekennzeichnet, dass** das mindestens eine teilkristallines Polyamid (A) gebildet ist aus den Monomeren (a1) bis (a2) und gegebenenfalls (a3):
(a1) mindestens eines Diamins, ausgewählt aus der Gruppe bestehend aus 1,4-Butandiamin, 1,5-Pentandiamin, 1,6-Hexandiamin, 1,8-Octandiamin, 1,9-Nonandiamin, 1,10-Decandiamin, 1,12-Dodecandiamin, 2-Methyl-1,5-Pentandiamin, 2-Methyl-1,8-octandiamin, Bis(4-amino-cyclohexyl)methan, Bis(aminomethyl)cyclohexan, Isophorondiamin und m-Xylylendiamin, und
(a2) mindestens einer Dicarbonsäure, ausgewählt aus der Gruppe bestehend aus 1,6-Hexandisäure, 1,9-Nonandisäure, 1,10-Decandisäure, 1,12-Dodecandisäure, 1,13-Tetradecandisäure, 1,14-Tetradecandisäure, 1,15-Pentadecansäure, 1,16-Hexadecandisäure, 1,17-Heptadecandisäure, 1,18-Octadecandisäure, Cyclohexandicarbonsäure, dimere Fettsäure mit 36 oder 44 C-Atomen, Isophthalsäure und Terephthalsäure, und/oder
(a3) einem oder mehreren Lactamen oder ω-Aminosäuren, ausgewählt aus der Gruppe bestehend aus Lactam-6, Lactam-11, Lactam-12, 1,6-Aminohexansäure, 1,11-Aminoundecansäure und 1,12-Aminododecansäure.

6. Verwendung nach einem der vorhergehenden Ansprüche, **dadurch gekennzeichnet, dass** das mindestens eine teilkristallines Polyamid (A) ausgewählt ist aus der Gruppe bestehend aus PA 6, PA 46, PA 49, PA 410, PA 411, PA 412, PA 413, PA 414, PA 415, PA 416, PA 417, PA 418, PA 436, PA 56, PA 510, PA 66, PA 69, PA 610, PA 611, PA 612, PA 613, PA 614, PA 615, PA 616, PA 617, PA 618, PA 1010, PA 66/6, PA 6/66/610, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA MXD6/MXDI, Polyamiden mit einer 4T-Wiederholungseinheit, Polyamiden mit einer 5T-Wiederholungseinheit, Polyamiden mit einer 6T-Wiederholungs-einheit, Polyamiden mit einer 8T-Wiederholungs-einheit, Polyamiden mit einer 9T-Wiederholungseinheit, Polyamiden mit einer 10T-Wiederholungseinheit, Polyamiden mit einer 12T-Wiederholungseinheit, PA 4T/6T, PA 4T/8T, PA 6T/8T, PA 4T/MPMDT, PA 4T/4I, PA 5T/5I, PA 6T/6I, PA 9T/MODT, PA 9T/9I, PA 10T, PA 10T/6T, PA 10T/6T/10I/6I, PA 12T, PA MPMDT/6T, PA 10T/10I, PA 12T/12I, PA 4T/6T/8T, PA 4T/6T/10T, PA 4T/8T/10T, PA6T/8T/10T, PA 4T/6T/MPMDT, PA 6T/6, PA 6T/66, PA 4T/66, PA 5T/66, PA 6T/6I/6, PA 10T/6T/1012/612, PA 6T/BACT, PA 66/BAC6/MACM6, PA 66/BAC6/PACM6, PA 66/BAC6/IPD6 und deren Mischungen oder Copolymeren.

7. Verwendung nach einem der vorhergehenden Ansprüche, **dadurch gekennzeichnet, dass** das mindestens eine amorphe oder mikrokristalline Polyamid (B) eine Schmelzwärme gemessen nach ISO 11537-3 (2013) von maximal 28 J/g, besonders bevorzugt von maximal 25 J/g, ganz besonders bevorzugt von 0 bis 23 J/g, und/oder
eine Lichttransmission gemessen an einer Platte mit der Dicke 2 mm nach ASTM D 1003-13 (2013) von mindestens 80%, bevorzugt mindestens 85 %, besonders bevorzugt mindestens 90 % aufweist, und/oder
eine Glasübergangstemperatur gemessen nach ISO 11537-2 (2013) von 60 bis 240 °C, bevorzugt von 80 bis 230 °C, besonders bevorzugt von 105 bis 210 °C
aufweist.

8. Verwendung nach einem der vorhergehenden Ansprüche, **dadurch gekennzeichnet, dass** das mindestens eine amorphe oder mikrokristalline Polyamid (B) gebildet ist aus den Monomeren (b1) bis (b2) und gegebenenfalls (b3):
(b1) mindestens eines Diamins, ausgewählt aus der Gruppe bestehend aus 1,6-Hexandiamin, 1,10-Decandiamin, 1,12-Dodecandiamin, 2-Methyl-1,5-Pentandiamin, m-Xylylendiamin, Bis(4-amino-3-methyl-cyclohexyl)methan, Bis(4-amino-cyclohexyl)-methan, Bis(4-amino-3,5-dimethyl-cyclohexyl)methan, Bis-(aminomethyl)cyclohexan ND für 2,2,4-Trimethylhexamethylendiamin und IND für 2,4,4-Trimethylhexamethylendiamin, und
(b2) mindestens einer Dicarbonsäure, ausgewählt aus der Gruppe bestehend aus 1,6-Hexandisäure, 1,10-Decandisäure, 1,12-Dodecandisäure, 1,14-Tetradecandisäure, 1,16-Hexadecandisäure, 1,18-Octadecandisäure, dimere Fettsäure mit 36 oder 44 C-Atomen, Cyclohexandicarbonsäure, Isophthalsäure, Terephthalsäure und Naphthalindicarbonsäure, und/oder
(b3) einem oder mehreren Lactamen oder ω-Aminosäuren, ausgewählt aus der Gruppe bestehend aus Lactam-6, Lactam-11, Lactam-12, 1,6-Aminohexansäure, 1,11-Aminoundecansäure und 1,12-Aminododecansäure.

9. Verwendung nach einem der vorhergehenden Ansprüche, **dadurch gekennzeichnet, dass** das mindestens eine amorphe oder mikrokristalline Polyamid (B) ausgewählt ist aus der Gruppe bestehend aus PA 6I, PA 6I/6T, PA 10I/10T, PA MPMDI/MPMDT, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM16, PA MACM18, PA NDT/INDT, PA TMDC10, PA TMDC12, PA TMDC14, PA TMDC16,PA TMDC18, PA PACM12, PA PACM14, PA PACM16, PA PACM18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/MACM36, PA MACMI/MACMT/12, PA 6I/6T/MACMI/MACMT, PA 6I/6T/MACMI/MACMT/12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM16/1016, PA MACM18/1018, PA 6I/6T/MACMI/MACMT/MACM12/612, PA 6I/6T/MACMI/MACMT/MACM12, PA MACMI/MACMT/MACM12/12, PA MACMI/MACMT/MACM12, PA 6I/6T/MACMI/MACMT/12, PA 6I/6T/6N/MACMI/MACMT/MACMN, PA TMDC12/TMDCT/TMDC36, PA TMDC12/TMDCI, PA TMDC12/TMDCI/TMDC36, PA TMDC12/TMDCT, PA 6I/6T/BACI/BACT, PA MACMI/MACMT/BACI/BACT, PA 6I/6T/MACMI/MACMT/BACI/BACT, PA MACMI/MACMT/MACM12/MACM36, PA MACMI/MACMT/MACM14/MACM36, PA MACMI/MACMT/MACMCHD/MACM36, PA TMDCI/TMDCT/TMDC12/TMDC36, PA TMDCI/TMDCT/TMDC14/TMDC36, PA TMDCI/TMDCT/TMDCCHD/TMDC36 und Mischungen oder Copolymeren hiervon,
wobei das MACM bis zu maximal 35 Mol-% durch PACM und/oder TMDC ersetzt sein kann, bezogen auf die Summe der molaren Anteile aller Monomere von 100 Mol-%, und/oder
das Laurinlactam ganz oder teilweise durch Caprolactam, und oder die dimere Fettsäure mit 36 Kohlenstoffatomen ganz oder teilweise durch eine dimere Fettsäure mit 44 Kohlenstoffatomen ersetzt sein kann.

10. Verwendung nach einem der vorhergehenden Ansprüche, **dadurch gekennzeichnet, dass** die Polyamid-Formmasse mindestens zusätzlich mindestens einen anorganischen Füllstoff (C) und/oder gegebenenfalls mindestens einen Zusatzstoff (D), und/oder gegebenenfalls mindestens ein weiteres Polymer (E), welches verschieden vom Polyamid (A), vom Polyamid (B) und verschieden vom Zusatzstoff (D) ist, enthält.

11. Verwendung nach vorhergehendem Anspruch, **dadurch gekennzeichnet, dass** die Polyamid-Formmasse mindestens einen anorganischen Füllstoff (C) enthält, der ausgewählt ist aus der Gruppe bestehend aus faserförmigen Füllstoffen, nadelförmigen Füllstoffen sowie Mischungen und Kombinationen hiervon.

12. Verwendung nach einem der beiden vorhergehenden Ansprüche, **dadurch gekennzeichnet, dass** die Polyamid-Formmasse mindestens einen anorganischen Füllstoff (C) enthält, der ausgewählt ist aus der Gruppe bestehend aus Glasfasern, Carbonfasern sowie Mischungen und Kombinationen hiervon.

13. Verwendung nach einem der vorhergehenden Ansprüche, **dadurch gekennzeichnet, dass** die Polyamid-Formmasse die folgende Zusammensetzung aufweist:
19 bis 95 Gew.-%, bevorzugt 25 bis 89,39 Gew.-%, besonders bevorzugt 21 bis 67,9 Gew.-% mindestens ein teilkristallines Polyamid (A),
5 bis 60 Gew.-%, bevorzugt 10 bis 50 Gew.-%, besonders bevorzugt 15 bis 30 Gew.-%mindestens ein amorphes oder mikrokristallines Polyamid (B),
0 bis 70 Gew.-%, bevorzugt 0,1 bis 60 Gew.-%, besonders bevorzugt 15 bis 50 Gew.-% mindestens einen anorganischen Füllstoff (C),
0 bis 6 Gew.-%, bevorzugt 0,01 bis 5 Gew.-% und besonders bevorzugt 0,1 bis 4 Gew.-% mindestens einen Zusatzstoff (D), sowie
0 bis 20 Gew.-%, bevorzugt 0,5 bis 15 Gew.-% und besonders bevorzugt 2 bis 10 Gew.-% mindestens ein Polymer (E),
wobei sich die Komponenten (A) bis (E) auf 100 Gew.-% ergänzen.

14. Verwendung nach einem der vorhergehenden Ansprüche, **dadurch gekennzeichnet, dass** die Polyamid-Formmasse mindestens zusätzlich mindestens einen anorganischen Füllstoff (C) und/oder gegebenenfalls mindestens einen Zusatzstoff (D) enthält.

15. Verwendung nach vorhergehendem Anspruch, **dadurch gekennzeichnet, dass** die Polyamid-Formmasse die folgende Zusammensetzung aufweist:
19 bis 95 Gew.-%, bevorzugt 25 bis 89,89 Gew.-%, besonders bevorzugt 31 bis 69,9 Gew.-% mindestens ein teilkristallines Polyamid (A),
5 bis 60 Gew.-%, bevorzugt 10 bis 50 Gew.-%, besonders bevorzugt 15 bis 30 Gew.-%mindestens ein amorphes oder mikrokristallines Polyamid (B),
0 bis 70 Gew.-%, bevorzugt 0,1 bis 60 Gew.-%, besonders bevorzugt 15 bis 50 Gew.-% mindestens einen anorganischen Füllstoff (C), sowie
0 bis 6 Gew.-%, bevorzugt 0,01 bis 5 Gew.-%, besonders bevorzugt 0,1 bis 4 Gew.-% mindestens einen Zusatzstoff (D)
wobei sich die Komponenten (A) bis (D) auf 100 Gew.-% ergänzen.
